# NEW EUROPEAN PATENT SPECIFICATION

(11) **EP 1 811 728 B2**
(45) Date of publication and mention of the opposition decision: **12.09.2012**
(45) Mention of the grant of the patent: 07.10.2009
(21) Application number: 07100094.7
(22) Date of filing: 04.01.2007
(51) Int. Cl.: H04L 12/56

(54) **Method, system and device of traffic management in a multi-protocol label switching network**
Verfahren, System und Vorrichtung zur Verkehrsverwaltung in einem MPLS-Netzwerk
Procédé, système et dispositif de gestion de trafic dans un réseau de commutation d'étiquette à protocoles multiples

(30) Priority: 18.01.2006 CN 200610001621
(43) Date of publication of application: 25.07.2007
(73) Proprietor: Huawei Technologies Co., Ltd., Longgang District, Shenzhen Guangdong 518129 (CN)
(72) Inventor: Dong Weisi, 518129, Shenzhen, Guangdong (CN)
(74) Representative: Isarpatent

(56) References cited:
- WO-A-2005/101730
- GB-A- 2 399 257
- US-A1- 2003 131 131
- US-A1- 2006 002 370

## Description

### Field of the invention

The present invention relates to the network communication technology, and more particularly, to a method, a system and a device of traffic management in a Multi-Protocol Label Switching (MPLS) network.

### Background of the invention

The MPLS technology has already been widely used in Internet Protocol (IP) bearer networks; hence the new generation IP bearer network is also called an MPLS bearer network. The IP bearer network implements multi-service isolation, QoS guarantee and the traffic engineering of the IP network by using MPLS-related technologies, such as, an MPLS Virtual Private Network (MPLS VPN), MPLS Traffic Engineering (MPLS TE), and etc. Therefore, in the current IP bearer network, the majority of traffics are the MPLS label traffics, which are based on either a Point-to-Point (P2P) MPLS tunnel or a Point-to-Multi-Points (P2MP) MPLS tunnel.

In a pure IP traffic network, by obtaining quintuple of an IP packet, the meaning of the network traffics may be known completely, and the traffic control, e.g., QoS re-tagging, security control, traffic regulation, and etc., may be implemented. However, in an MPLS label switching network, the network traffic management can not be performed as that done in the pure IP traffic network, since the traffics in the MPLS network are MPLS labels, and the labels are assigned dynamically, the special meanings of which can not be determined in advance. Especially, in an MPLS VPN, multilayer labels are usually adopted, and the meaning indicated by the label of each layer can not be determined inside the network; furthermore, it is unfeasible to shuck these network labels to identify the internal information, because the MPLS packets therein may be IP packets where the case of address overlap may exist, or may be certain link-layer packets or Time Division Multiplex (TDM) information which can not be identified inside the network.

Thus, the traffic analysis functions of some current routers are unable to analyze and manage the MPLS network traffic actually. In addition, the traditional IP address-based management method of network traffics is substantially implemented based on special hosts (i.e., quintuple based on an IP address) and can not incarnate the management on a domain, a convergence service class, or a user group, because the IP address information of these individuals being managed is disorderly distributed. In other words, it is inefficient and inconvenient to manage the network traffic merely depending on the IP address information.

Document EP 1 528 731 discloses a method providing MPLS packets rerouted to a protection path with an additional label on the outer layer allowing the determination of eggress nodes of the rerouted path.

### Summary

Embodiments of the present invention provide a method of traffic management in an MPLS network, as defined in claim 1.

The above solution may further include: deciding a configuration mode of the management tag according to management demands, wherein, setting a management tag may include: setting the management tag based on the decided configuration mode of the management tag.

In the above solution, the decided configuration mode of the management tag may include: assigning different management tags to service traffics sent to different Provider Edges (PE) in a Virtual Private Network (VPN); or assigning one management tag to the service traffics sent to various PEs in a VPN; or independently assigning a management tag to the traffics accessed by a certain PE site.

In the above solution, setting a management tag may include: setting the management tag according to a routing policy, or attributes of the route, or a policy route.

In the above solution, identifying the service traffic data carried in the MPLS packet according to the management tag set in the MPLS packet and performing traffic management for the service traffic data may include:
identifying, by a device of the MPLS network receiving the MPLS packet, the service traffic data and performing the traffic management; or, identifying, by a device of the MPLS network receiving the MPLS packet, the service traffic data, sending, by the device of the MPLS network, an identification result to an external network management device, and performing, by the external network management device, the traffic management according to the identification result.

An embodiment of the present invention provides a system of traffic management in an MPLS network, as defined in claim 11.

In the above system, the management tag configuration module may be further configured to decide a configuration mode of the management tag according to management demands and set the management tag according to the decided configuration mode of the management tag.

An embodiment of the present invention also provides an MPLS network device, as defined in claim 16.

The above device may further include: a traffic management module, configured for receiving an identification result of the service traffic data from the traffic identification module and performing traffic management.

It is can be seen that the traffic management in an MPLS network can be realized by the embodiments of the present invention, where the network manager can identify traffic of a certain user as required and further perform for the traffic, analysis, statistic and charging, traffic engineering regulation, or QoS tagging etc.

### Brief description of the drawings

Figure 1 is a diagram illustrating the modules in an embodiment of the system according to an embodiment of the present invention;
Figure 2 is a diagram illustrating the management tag assignment of the system according to an embodiment of the present invention; and
Figure 3 is a flowchart of an embodiment of the method according to an embodiment of the present invention.

### Detailed description of preferred embodiments

Embodiments of the invention provide a method, a system and a device of traffic management in an MPLS network, wherein, a management tag is set in an MPLS packet at the edge of the MPLS network, more particularly, the tag is set between the user traffic data and the MPLS service label so that the service traffics can be identified, by which means the management of the MPLS service traffic can be made more conveniently.

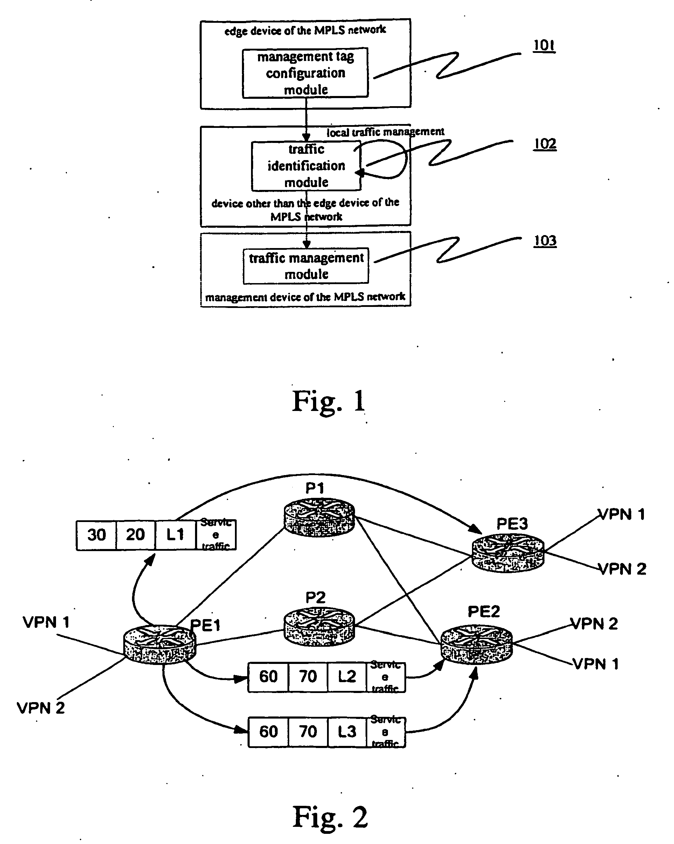

An embodiment of a system of traffic management in an MPLS network is shown in Figure 1. The system includes a management tag configuration module, a traffic identification module and a traffic management module.

The management tag configuration module can be integrated into an edge device of the MLPS network, it is used to set a management tag between the user traffic data and the MPLS service label in an MPLS packet, wherein, different management tags represent different traffic meanings. The management tag configuration module may assign a management tag for a service to be managed by the network according to the management demands. For example, if service traffics, sent to different Provider Edges (PE) by a VPN, need precise management, different management tags may be assigned to the service traffics sent to the different PEs respectively; if it is unnecessary to consider the difference of the service traffics sent by the VPN to the different PEs, only one management tag can be assigned to the service traffics sent by the VPN; and if it is desired to know the traffics which is in a certain VPN and is from a certain PE site, one management tag may be independently assigned to the service traffics accessed by the PE site. As shown in Figure 2, L1 may be used as a management tag of service traffics from PE1 to PE3 in the VPN 1 service, L2 may be used as a management tag of service traffics from PE1 to PE2 in the VPN1 service, and L3 may be used as a management tag of the service traffics in the VPN2 service without distinguishing the destination addresses of the service traffics.

The traffic identification module is integrated into a device other than the edge device on which the management tag configuration module is set, such as, a core device of the MPLS network, for identifying the special service traffic according to the management tag in the MPLS label packet from the management tag configuration module and sending the identification result to the traffic management module.

The traffic management module is integrated into a management device of the MPLS network, the traffic management module is used to obtain the identification result from the traffic identification module; and the traffic management module performs the corresponding management, including security management, QoS management, traffic distribution regulation, and charging etc., on the special service traffic according to the identification result.

The traffic identification module may be integrated into any other device of the MPLS network besides the core device of MPLS network mentioned above. Furthermore, the traffic management module may be integrated into the same device where the traffic identification module is integrated. In the case of the traffic management module and traffic identification module being integrated into the same device, After identifying the management tag, the traffic identification module transmits the identification result to the local traffic management module, thereby the network device, where the traffic identification module is located, is able to directly perform the local traffic management, e.g., QoS management, traffic statistic, and etc. If the traffic management module is integrated into a management device of the MPLS network, the traffic identification module transmits the traffic identified by the management tag to the traffic management module set on the management device which will perform the traffic management independently, such as, security analysis, charging, and etc.

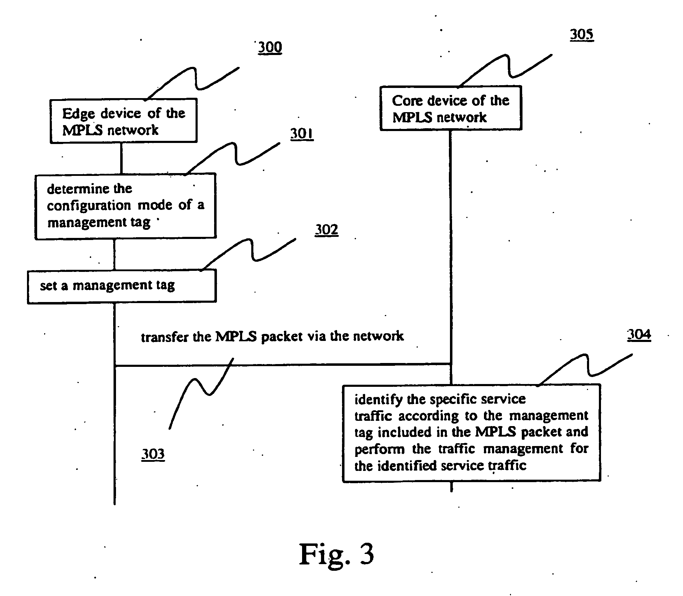

The procedure of the traffic management in an MPLS network according to an embodiment of the present invention is shown in Figure 3. As shown in Figure 3, in the embodiment, the procedure is applied to an edge device and a core device in the MPLS network, including:
Step 301: The management tag configuration module in the edge device of the MPLS network decides a configuration mode of the management tag.

The configuration mode of the management tag may be decided mainly according to the user management requirements, the mode may indicate that different management tags should be assigned respectively to the service traffics sent to different PEs by the VPN, or one management tag should be assigned to the service traffics sent to various PEs by the VPN, or one management tag should be assigned to the service traffics accessed by a certain PE site.

When different configuration modes of the management tag are adopted to set management tags, the management tags may represent different meanings, e.g., the traffic of a certain user's VPN, or the traffic between a pair of P2P sites in a certain VPN, or the traffic in a VPN which is submitted from a certain Customer Edge (CE) site, or the traffic of a certain service in a VPN, or the traffic submitted from a certain physical topology site in the transfer of a general public MPLS network, or the traffic of a P2MP MPLS multicast group etc. The management tag may be set as 4 bits long or with another length as required.

Step 302: After determining the configuration modes of the management tag, the management tag configuration module sets a management tag for the MPLS label packet currently to be sent.

The management tag may be set on the MPLS label packet in an edge device of an operator's MPLS network, or may be reset by an intermediate device inside the network. The management tag is independent of the user service and does not represent a special service meaning, but it is a kind of network management resources effective in the whole MPLS network of the operator. When in use, the management tag may be assigned based on a certain rule, such as, assigned by domain, service, or etc.

The management tag may be set on the outer layer of the user traffic data by the management tag configuration module according to the service management demands, and then other MPLS label information required by other service forward procedures may be set on the outer layer of the management tag. That is, the management tag is set below the MPLS label stack bottom and on the layer of the user traffic data, and as shown in the table below, it is set between the user traffic data and the MPLS service label:

| | | | |
|---|---|---|---|
| MPLS service label | MPLS service label (stack bottom) | management tag | user traffic data |

The management tag may be set according to a routing policy, e.g., the next hop of the route or a VPN tag; or it may be set according to the attributes of the route, e.g., the attributes of a group and an extended group of the Border Gateway Protocol (BGP); or it may be set according to a policy route, such as, an entry, a destination address, or a source address.

Step 303: The MPLS label packet configured with the management tag is transmitted in the MPLS network, via which the MPLS label packet is transmitted from the edge device of the MPLS network to the core device of the MPLS network.

Step 304: The traffic identification module in the core device of the MPLS network identifies the specific service traffic according to the management tag included in the MPLS label packet. The traffic identification module may send the identification result to the traffic management module located in an external network management device, which then performs the MPLS traffic management of the specific service traffic, e.g., charging and security analysis etc. On the other hand, the identification result may be also sent to the local traffic management module which performs the management of the local identified traffic directly, e.g., QoS management, traffic statistic, or traffic leading.

In terms of the traffic of one type of services, the management tag is unique and global effective in the MPLS network, so the operator can identify the traffic with this management tag in any device of the MPLS network as required, thus the path that the service traffic passes is clear to the operator, which provides a basis for further network management.

According to the management tag, the traffic identification module may identify the specific information of the service traffic, such as, the traffic of a certain user or the traffic of a certain service of a certain user. With regard to a multi-service bearer network, the service traffic may be identified as the traffic of the Next Generation Network (NGN), the traffic of the IP Television (IPTV), or the traffic of the Internet.

Based on the identified management tag, on the one hand, what can be known is the path that the user service traffic passes in the network and whether the path accords with the desired service plan. On the other hand, traffic statistic and charging can be performed, while, according to the management tag, management operations, such as, QoS re-tagging, security management, and traffic distribution regulation etc can be implemented on the service traffic in some nodes.

To sum up, the traffic management of an MPLS label switching network can be implemented in accordance with embodiments of the present invention, wherein, according to the desires of the user, the management method and management tags can be dynamically assigned to a management group to realize the network service's traffic distribution analysis, QoS management, charging management, and security management etc.

The forgoing are only preferred embodiments of the present invention and are not intended to limit the protection scope of the present invention, and it should be known by those skilled in the art that there can be many deviations and changes within the range of the essential of the present invention, and the protection scope of which is defined in the following claims.

## Claims

1. A method of traffic management in a Multi-Protocol Label Switching, MPLS, network, comprising:
setting a management tag (302) on an outer layer of service traffic data carried in an MPLS packet when the MPLS packet is sent initially, the management tag being unique and global effective in the MPLS network; wherein the management tag is dynamically assigned according to desires of a user and is used for realizing traffic management of the service traffic data; the traffic management comprises any one or any combination of traffic distribution analysis, QoS management, charging management and security management; and
receiving the MPLS packet and identifying the service traffic data (304) carried in the MPLS packet according to the management tag set in the MPLS packet;
performing traffic management (304) for the service traffic data according to an identification result.

2. The method according to Claim 1, further comprising: deciding a configuration mode of the management tag according to management demands, wherein, setting a management tag comprises:
setting the management tag based on the decided configuration mode of the management tag.

3. The method according to Claim 2, wherein the decided configuration mode of the management tag comprises:
assigning different management tags to service traffics sent to different Provider Edges, PEs, in a Virtual Private Network; or assigning one management tag to the service traffics sent to various PEs in a VPN; or independently assigning a management tag to traffic accessed by a certain PE site.

4. The method according to Claims 1 or 2, wherein setting a management tag comprises:
setting the management tag according to a routing policy, or attributes of the route, or a policy route.

5. The method according to Claim 4, wherein setting the management tag according to a routing policy comprises:
setting the management tag according to the next hop of the route or a VPN tag.

6. The method according to Claim 4, wherein setting the management tag according to attributes of the route comprises:
setting the management tag according to the attributes of a group or an extended group.

7. The method according to Claim 4, wherein setting the management tag according to a policy route comprises:
setting the management tag according to an entry, a destination address, or a source address.

8. The method according to Claims 1 or 2, wherein setting the management tag comprises:
setting, by an edge device of the MPLS network, the management tag when the edge device initiates the MPLS packet.

9. The method according to Claim 1, wherein, identifying the service traffic data carried in the MPLS packet according to the management tag set in the MPLS packet and performing traffic management for the service traffic data comprises:
identifying, by a device of the MPLS network receiving the MPLS packet, the service traffic data and performing the traffic management; or,
identifying, by a device of the MPLS network receiving the MPLS packet, the service traffic data, sending, by the device of the MPLS network, an identification result to an external network management device, and performing, by the external network management device, the traffic management according to the identification result.

10. A system of traffic management for data communications in a data communications network, comprising:
a first device (101, 300), configured for setting a management tag on an outer layer of service traffic data carried in the MPLS packet, the management tag being unique and global effective in the MPLS network; wherein the management tag is dynamically assigned according to desires of a user and is used for realizing traffic management of the service traffic data; the traffic management comprises any one or any combination of traffic distribution analysis, QoS management, charging management and security management; and
a second device (102, 305), configured for receiving the MPLS packet from the first device, and identifying the service traffic data carried in the MPLS packet according to the management tag set in the MPLS packet;
a third device, configured for receiving an identification result of the service traffic data from the second device, and performing traffic management according to the identification result;
wherein the data communications network is an MPLS network.

11. The system according to Claim 10, wherein the first device is further configured to decide a configuration mode of the management tag according to management demands and set the management tag according to the decided configuration mode of the management tag.

12. The system according to claim 10, wherein the second device and the third device are two independent devices or co-located in the same device.

13. The system according to claim 10, wherein:
the first device is an edge device of the MPLS network; and
the second device is a core device of the MPLS network.

14. The system according to Claim 12, wherein
the third device is a management device of the MPLS network.

15. An MPLS network device for a data communications system, comprising:
a management tag configuration module (101), configured for setting a management tag on the outer layer of service traffic data carried in an MPLS packet, and sending out the MPLS packet, the management tag being unique and global in the MPLS network; wherein the management tag is dynamically assigned according to desires of a user and is used for realizing traffic management of the service traffic data; the traffic management comprises any one or any combination of traffic distribution analysis, QoS management, charging management and security management.

16. The device according to Claim 15, wherein
the device is an edge device of an MPLS network;
the management tag configuration module is further configured to decide a configuration mode of the management tag according to management demands and set the management tag according to the decided configuration mode of the management tag.

17. The device according to Claim 15, comprising
a management tag configuration module, configured for setting a management tag on the outer layer of service traffic data carried in an MPLS packet, and sending out the MPLS packet, wherein
the device is an edge device of an MPLS network, for initiating an MPLS packet.

18. The device according to Claim 17, wherein, the management tag configuration module is further configured to decide a configuration mode of the management tag according to management demands and set the management tag according to the decided configuration mode of the management tag.

19. An MPLS network device, comprising:
a traffic identification module, configured for receiving an MPLS packet and identifying service traffic data carried in the MPLS packet according to a management tag in the MPLS packet, the management tag being unique and global effective in the MPLS network; wherein the management tag is dynamically assigned according to desires of a user and is used for realizing traffic management of the service traffic data; the traffic management comprises any one or any combination of traffic distribution analysis, QoS management, charging management and security management.

20. The device according to Claim 19, further comprising:
a traffic management module, configured for receiving an identification result of the service traffic data from the traffic identification module and performing traffic management.

## Patentansprüche

1. Verfahren zur Verkehrssteuerung in einem Multi-Protokoll-Label-Switching-Netzwerk, MPLS-Netzwerk, welches Folgendes aufweist:
Setzen einer Steuerungskennung (302) auf einer äußeren Schicht von Dienstverkehrsdaten, welche in einem MPLS-Paket geführt werden, wenn das MPLS-Paket ursprünglich gesendet wird, wobei die Steuerungskennung einzeln vorliegt und für das gesamte MPLS-Netzwerk wirksam ist, wobei die Steuerungskennung entsprechend den Wünschen eines Benutzers dynamisch zugeordnet wird und für das Realisieren der Verkehrssteuerung der Dienstverkehrsdaten benutzt wird; die Verkehrssteuerung irgendeines oder irgendeine Kombination von Verkehrsverteilungsanalyse, QoS-Steuerung, Ladungssteuerung und Sicherheitssteuerung aufweist; und
Empfangen des MPLS-Pakets und Identifizieren der Dienstverkehrsdaten (304), welche in dem MPLS-Paket entsprechend der in dem MPLS-Paket gesetzten Steuerungskennung geführt werden;
Ausführen der Verkehrssteuerung (304) für die Dienstverkehrsdaten entsprechend einem Identifikationsergebnis.

2. Verfahren nach Anspruch 1, welches ferner Folgendes aufweist: Entscheiden über einen Konfigurationsmodus der Steuerungskennung entsprechend Steuerungsanforderungen, wobei das Setzen einer Steuerungskennung Folgendes aufweist:
Setzen der Steuerungskennung basierend auf dem Konfigurationsmodus der Steuerungskennung, für den sich entschieden wurde.

3. Verfahren nach Anspruch 2, wobei der Konfigurationsmodus der Steuerungskennung, für den sich entschieden wurde, Folgendes aufweist:
Zuordnen unterschiedlicher Steuerungskennungen für Dienstverkehre, welche an verschiedene Provider Edges, PEs, in einem Virtuellen Privaten Netzwerk gesendet wurden; oder Zuordnen einer Steuerungskennung für die Dienstverkehre, welche an verschiedene PEs in einem VPN gesendet wurden; oder unabhängiges Zuordnen einer Steuerungskennung für einen Verkehr, auf welchen auf einer bestimmten PE-Site zugegriffen wurde.

4. Verfahren nach Anspruch 1 oder 2, wobei das Setzen einer Steuerungskennung Folgendes aufweist:
Setzen der Steuerungskennung entsprechend einer Routing Policy oder Attributen der Route oder einer Policy Route.

5. Verfahren nach Anspruch 4, wobei das Setzen der Steuerungskennung entsprechend einer Routing Policy Folgendes aufweist:
Setzen der Steuerungskennung entsprechend dem nächsten Abschnitt der Route oder einer VPN-Kennung.

6. Verfahren nach Anspruch 4, wobei das Setzen der Steuerungskennung entsprechend Attributen der Route Folgendes aufweist:
Setzen der Steuerungskennung entsprechend den Attributen einer Gruppe oder einer erweiterten Gruppe.

7. Verfahren nach Anspruch 4, wobei das Setzen der Steuerungskennung entsprechend einer Policy Route Folgendes aufweist:
Setzen der Steuerungskennung entsprechend einem Eintrag, einer Zieladresse oder einer Quelladresse.

8. Verfahren nach Anspruch 1 oder 2, wobei das Setzen der Steuerungskennung Folgendes aufweist:
Setzen der Steuerungskennung durch eine Edge-Einrichtung des MPLS-Netzwerks, wenn die Edge-Einrichtung das MPLS-Paket initiiert.

9. Verfahren nach Anspruch 1, wobei das Identifizieren der Dienstverkehrsdaten, welche in dem MPLS-Paket entsprechend der in dem MPLS-Paket gesetzten Steuerungskennung geführt werden, und das Ausführen der Verkehrssteuerung für die Dienstverkehrsdaten Folgendes aufweisen:
Identifizieren durch eine Einrichtung des MPLS-Netzwerkes, welche das MPLS-Paket empfängt, der Dienstverkehrsdaten und Durchführen der Verkehrssteuerung; oder Identifizieren durch eine Einrichtung des MPLS-Netzwerkes, welche das MPLS-Paket empfängt, der Dienstverkehrsdaten, Senden eines Identifikationsergebnisses durch die Einrichtung des MPLS-Netzwerkes an eine externe Netzwerksteuerungseinrichtung und Durchführen durch die externe Netzwerk-Steuerungseinrichtung des Verkehrssteuerns entsprechend dem Identifikationsergebnis.

10. System der Verkehrssteuerung für Datenkommunikation in einem Datenkommunikationsnetzwerk, welches Folgendes aufweist:
eine erste Einrichtung (101, 300), welche so konfiguriert ist, dass sie eine Steuerungskennung auf einer äußeren Schicht von Dienstverkehrsdaten setzt, welche in dem MPLS-Paket geführt werden, wobei die Steuerungskennung einzeln vorliegt und für das gesamte MPLS-Netzwerk wirksam ist, wobei die Steuerungskennung entsprechend den Wünschen eines Benutzers dynamisch zugeordnet wird und für das Realisieren der Verkehrssteuerung der Dienstverkehrsdaten benutzt wird; die Verkehrssteuerung irgendeines oder irgendeine Kombination von Verkehrsverteilungsanalyse, QoS-Steuerung, Ladungssteuerung und Sicherheitssteuerung aufweist; und
eine zweite Einrichtung (102, 305), welche so konfiguriert ist, dass sie das MPLS-Paket von der ersten Einrichtung empfängt und die Dienstverkehrsdaten identifiziert, welche in dem MPLS-Paket entsprechend der in dem MPLS-Paket gesetzten Steuerungskennung geführt werden;
eine dritte Einrichtung, welche so konfiguriert ist, dass sie ein Identifikationsergebnis der Dienstverkehrsdaten von der zweiten Einrichtung empfängt und die Verkehrssteuerung entsprechend dem Identifikationsergebnis durchführt;
wobei das Datenkommunikationsnetzwerk ein MPLS-Netzwerk ist.

11. System nach Anspruch 10, wobei die erste Einrichtung ferner so konfiguriert ist, dass sie über einen Konfigurationsmodus der Steuerungskennung entsprechend Steuerungsanforderungen entscheidet und die Steuerungskennung entsprechend dem Konfigurationsmodus der Steuerungskennung, für den sich entschieden wurde, setzt.

12. System nach Anspruch 10, wobei die zweite Einrichtung und die dritte Einrichtung zwei unabhängige Einrichtungen oder zusammen in derselben Einrichtung platziert sind.

13. System nach Anspruch 10, wobei:
die erste Einrichtung eine Edge-Einrichtung des MPLS-Netzwerkes ist; und
die zweite Einrichtung eine Kern-Einrichtung des MPLS-Netzwerkes ist.

14. System nach Anspruch 12, wobei die dritte Einrichtung eine Steuerungseinrichtung des MPLS-Netzwerkes ist.

15. MPLS-Netzwerkeinrichtung für ein Datenkommunikationssystem, welche Folgendes aufweist:
ein Steuerungskennungs-Konfigurationsmodul (101), welches so konfiguriert ist, dass es eine Steuerungskennung auf der äußeren Schicht von Dienstverkehrsdaten setzt, welche in einem MPLS-Paket geführt werden, und das MPLS-Paket aussendet, wobei die Steuerungskennung einzeln vorliegt und für das gesamte MPLS-Netzwerk wirksam ist, wobei die Steuerungskennung entsprechend den Wünschen eines Benutzers dynamisch zugeordnet wird und für das Realisieren der Verkehrssteuerung der Dienstverkehrsdaten benutzt wird; die Verkehrssteuerung irgendeines oder irgendeine Kombination von Verkehrsverteilungsanalyse, QoS-Steuerung, Ladungssteuerung und Sicherheitssteuerung aufweist.

16. Einrichtung nach Anspruch 15, wobei die Einrichtung eine Edge-Einrichtung eines MPLS-Netzwerkes ist; das Steuerungskennungs-Konfigurationsmodul ferner so konfiguriert ist, dass es über einen Konfigurationsmodus der Steuerungskennung entsprechend Steuerungsanforderungen entscheidet und die Steuerungskennung entsprechend dem Konfigurationsmodus der Steuerungskennung, für den sich entschieden wurde, setzt.

17. Einrichtung nach Anspruch 15, welche Folgendes aufweist:
ein Steuerungskennungs-Konfigurationsmodul, welches so konfiguriert ist, dass es eine Steuerungskennung auf der äußeren Schicht der Dienstverkehrsdaten, welche in einem MPLS-Paket geführt werden, setzt und das MPLS-Paket aussendet, wobei die Einrichtung eine Edge-Einrichtung eines MPLS-Netzwerkes ist, um ein MPLS-Paket zu initiieren.

18. Einrichtung nach Anspruch 17, wobei das Steuerungskennungs-Konfigurationsmodul ferner so konfiguriert ist, dass es über einen Konfigurationsmodus der Steuerungskennung entsprechend Steuerungsanforderungen entscheidet und die Steuerungskennung entsprechend dem Konfigurationsmodus der Steuerungskennung, für den sich entschieden wurde, setzt.

19. MPLS-Netzwerkeinrichtung, welche Folgendes aufweist:
ein Verkehrs-Identifikationsmodul, welches so konfiguriert ist, dass es ein MPLS-Paket empfängt und Dienstverkehrsdaten identifiziert, welche in dem MPLS-Paket entsprechend einer Steuerungskennung in dem MPLS-Paket geführt werden, wobei die Steuerungskennung einzeln vorliegt und für das gesamte MPLS-Netzwerk wirksam ist, wobei die Steuerungskennung entsprechend den Wünschen eines Benutzers dynamisch zugeordnet wird und für das Realisieren der Verkehrssteuerung der Dienstverkehrsdaten benutzt wird; die Verkehrssteuerung irgendeines oder irgendeine Kombination von Verkehrsverteilungsanalyse, QoS-Steuerung, Ladungssteuerung und Sicherheitssteuerung aufweist.

20. Einrichtung nach Anspruch 19, welche ferner Folgendes aufweist:
ein Verkehrssteuerungsmodul, welches so konfiguriert ist, dass es ein Identifikationsergebnis der Dienstverkehrsdaten von dem Verkehrs-Identifikationsmodul empfängt und Verkehrssteuerung durchführt.

## Revendications

1. Procédé de gestion de trafic dans un réseau de commutation multiprotocole par étiquette, MPLS, comprenant :
le paramétrage d'une étiquette de gestion (302) sur une couche extérieure de données de trafic de service transportées dans un paquet MPLS quand le paquet MPLS est envoyé initialement, l'étiquette de gestion étant unique et s'appliquant à l'ensemble du réseau MPLS ; dans lequel l'étiquette de gestion est attribuée de façon dynamique selon les souhaits d'un utilisateur et est utilisée pour réaliser la gestion de trafic des données de trafic de service ; la gestion de trafic comprend l'une quelconque ou n'importe quelle combinaison de l'analyse de distribution de trafic, de la gestion de QoS, de la gestion de facturation et de la gestion de sécurité ; et
la réception du paquet MPLS et l'identification des données de trafic de service (304) transportées dans le paquet MPLS selon l'étiquette de gestion paramétrée dans le paquet MPLS ;
la réalisation de la gestion de trafic (304) pour les données de trafic de service selon un résultat d'identification.

2. Procédé selon la revendication 1, comprenant en outre : la détermination d'un mode de configuration de l'étiquette de gestion selon des exigences de gestion, dans lequel, le paramétrage d'une étiquette de gestion comprend :
le paramétrage de l'étiquette de gestion en se basant sur le mode de configuration déterminé de l'étiquette de gestion.

3. Procédé selon la revendication 2, dans lequel le mode de configuration déterminé de l'étiquette de gestion comprend :
l'attribution d'étiquettes de gestion différentes à des trafics de service envoyés à différents routeurs d'accès côté fournisseur (Provider Edge), PE, dans un Réseau Privé Virtuel ; ou l'attribution d'une seule étiquette de gestion aux trafics de service envoyés à divers PE dans un VPN ; ou l'attribution indépendante d'une étiquette de gestion à un trafic auquel accède un certain site de PE.

4. Procédé selon les revendications 1 ou 2, dans lequel le paramétrage d'une étiquette de gestion comprend :
le paramétrage de l'étiquette de gestion selon une politique de routage, ou selon des attributs du chemin, ou selon un chemin basé sur une politique.

5. Procédé selon la revendication 4, dans lequel le paramétrage de l'étiquette de gestion selon une politique de routage comprend :
le paramétrage de l'étiquette de gestion selon le saut suivant du chemin ou selon une étiquette de VPN.

6. Procédé selon la revendication 4, dans lequel le paramétrage de l'étiquette de gestion selon les attributs du chemin comprend :
le paramétrage de l'étiquette de gestion selon les attributs d'un groupe ou d'un groupe étendu.

7. Procédé selon la revendication 4, dans lequel le paramétrage de l'étiquette de gestion selon un chemin basé sur une politique comprend :
le paramétrage de l'étiquette de gestion selon une entrée, une adresse de destination, ou une adresse de source.

8. Procédé selon les revendications 1 ou 2, dans lequel le paramétrage de l'étiquette de gestion comprend :
le paramétrage, par un équipement de bordure (Edge Device) du réseau MPLS, de l'étiquette de gestion lorsque l'équipement de bordure introduit le paquet MPLS.

9. Procédé selon la revendication 1, dans lequel l'identification des données de trafic de service transportées dans le paquet MPLS selon l'étiquette de gestion paramétrée dans le paquet MPLS et la réalisation de la gestion de trafic pour les données de trafic de service comprennent :
l'identification, par un dispositif du réseau MPLS recevant le paquet MPLS, des données de trafic de service et la réalisation de la gestion de trafic ; ou, l'identification, par un dispositif du réseau MPLS recevant le paquet MPLS, des données de trafic de service, l'envoi, par le dispositif du réseau MPLS, d'un résultat d'identification à un dispositif de gestion de réseau externe, et la réalisation, par le dispositif de gestion de réseau externe, de la gestion de trafic selon le résultat d'identification.

10. Système de gestion de trafic pour la transmission de données dans un réseau de transmission de données, comprenant :
un premier dispositif (101, 300), configuré pour paramétrer une étiquette de gestion sur une couche extérieure de données de trafic de service transportées dans le paquet MPLS, l'étiquette de gestion étant unique et s'appliquant à l'ensemble du réseau MPLS ; dans lequel l'étiquette de gestion est attribuée de façon dynamique selon les trafic de service ; la gestion de trafic comprend l'une quelconque ou n'importe quelle combinaison de l'analyse de distribution de trafic, de la gestion de QoS, de la gestion de facturation et de la gestion de sécurité ; et
un deuxième dispositif (102, 305), configuré pour recevoir le paquet MPLS en provenance du premier dispositif, et pour identifier les données de trafic de service transportées dans le paquet MPLS selon l'étiquette de gestion paramétrée dans le paquet MPLS ;
un troisième dispositif, configuré pour recevoir un résultat d'identification des données de trafic de service en provenance du deuxième dispositif, et pour effectuer la gestion de trafic selon le résultat d'identification ;
dans lequel le réseau de transmission de données est un réseau MPLS.

11. Système selon la revendication 10, dans lequel le premier dispositif est en outre configuré pour déterminer un mode de configuration de l'étiquette de gestion selon des exigences de gestion et pour paramétrer l'étiquette de gestion selon le mode de configuration déterminé de l'étiquette de gestion.

12. Système selon la revendication 10, dans lequel le deuxième dispositif et le troisième dispositif sont deux dispositifs indépendants ou situés dans le même dispositif.

13. Système selon la revendication 10, dans lequel :
le premier dispositif est un équipement de bordure du réseau MPLS ; et
le deuxième dispositif est un équipement de coeur (Core Device) du réseau MPLS.

14. Système selon la revendication 12, dans lequel :
le troisième dispositif est un dispositif de gestion du réseau MPLS.

15. Dispositif de réseau MPLS pour un système de transmission de données, comprenant
un module de configuration d'étiquette de gestion (101), configuré pour paramétrer une étiquette de gestion sur la couche extérieure de données de trafic de service transportées dans un paquet MPLS, et pour expédier le paquet MPLS, l'étiquette de gestion étant unique et s'appliquant à l'ensemble du réseau MPLS ; dans lequel l'étiquette de gestion est attribuée de façon dynamique selon les souhaits d'un utilisateur et est utilisée pour réaliser la gestion de trafic des données de trafic de service ; la gestion de trafic comprend l'une quelconque ou n'importe quelle combinaison de l'analyse de distribution de trafic, de la gestion de QoS, de la gestion de facturation et de la gestion de sécurité.

16. Dispositif selon la revendication 15, dans lequel
le dispositif est un équipement de bordure d'un réseau MPLS ;
le module de configuration d'étiquette de gestion est en outre configuré pour déterminer un mode de configuration de l'étiquette de gestion selon des exigences de gestion et pour paramétrer l'étiquette de gestion selon le mode de configuration déterminé de l'étiquette de gestion.

17. Dispositif selon la revendication 15, comprenant :
un module de configuration d'étiquette de gestion, configuré pour paramétrer une étiquette de gestion sur la couche extérieure de données de trafic de service transportées dans un paquet MPLS, et pour expédier le paquet MPLS, dans lequel le dispositif est un équipement de bordure d'un réseau MPLS, pour introduire un paquet MPLS.

18. Dispositif selon la revendication 17, dans lequel le module de configuration d'étiquette de gestion est en outre configuré pour déterminer un mode de configuration de l'étiquette de gestion selon des exigences de gestion et pour paramétrer l'étiquette de gestion selon le mode de configuration déterminé de l'étiquette de gestion.

19. Dispositif de réseau MPLS, comprenant :
un module d'identification de trafic, configuré pour recevoir un paquet MPLS et pour identifier des données de trafic de service transportées dans le paquet MPLS selon une étiquette de gestion dans le paquet MPLS, l'étiquette de gestion étant unique et s'appliquant à l'ensemble du réseau MPLS ; dans lequel l'étiquette de gestion est attribuée de façon dynamique selon les souhaits d'un utilisateur et est utilisée pour réaliser la gestion de trafic des données de trafic de service ; la gestion de trafic comprend l'une quelconque ou n'importe quelle combinaison de l'analyse de distribution de trafic, de la gestion de QoS, de la gestion de facturation et de la gestion de sécurité.

20. Dispositif selon la revendication 19, comprenant en outre :
un module de gestion de trafic, configuré pour recevoir un résultat d'identification des données de trafic de service en provenance du module d'identification de trafic et pour effectuer la gestion de trafic.
